# EUROPEAN PATENT APPLICATION

(11) **EP 1 353 505 A1**
(43) Date of publication of application: **15.10.2003**
(21) Application number: 03006200.4
(22) Date of filing: 19.03.2003
(51) Int. Cl.: H04N 5/445

(54) **Progressive update of information**

(30) Priority: 10.04.2002 US 120224
(71) Applicant: MICROSOFT CORPORATION, Redmond, Washington 98052-6399 (US)
(72) Inventor: Barrett, Peter T., San Francisco, California 94117 (US); Danker, Daniel, Sunnyvale, California 94085 (US); Yerga, Chris, Palo Alto, California 94301 (US)
(74) Representative: Grünecker, Kinkeldey, Stockmair & Schwanhäusser Anwaltssozietät

(57) **Abstract**

A device receives a request to update displayed information. The displayed information is updated and multiple information groups are progressively displayed. The display of the multiple information groups are terminated if a second request to update the displayed information is received. The multiple information groups are prioritized and the highest priority information groups are displayed prior to lower priority information groups.

## Description

### TECHNICAL FIELD

This invention relates to navigating through displayed information and, in particular, to systems and methods for progressively displaying information based on the priority of the information.

### BACKGROUND

Client devices may include a program guide or other mechanism that displays information to a viewer, such as information regarding various television programs that are scheduled on different channels on particular days at different times. A viewer is able to scroll through the information to identify programs on different channels and/or scheduled at different times. When a viewer scrolls through the program listings, there is a significant amount of information on the screen that needs to be redrawn to update the program listings displayed to the viewer.

Drawing this information on the screen may take a significant amount of time, especially in systems that do not have a powerful processor. In some instances, the time required to redraw the entire screen is so large that the system cannot keep up with the viewer button presses (e.g., scroll button presses) on the remote control. This situation is frustrating to the viewer who is attempting to navigate through the information locate a particular entry.

Accordingly, there is a need for systems and methods that provide an improved, more optimized technique for updating and displaying information.

### SUMMARY

The systems and methods described herein prioritize the order in which information is displayed such that the viewer's selection and focus is always kept current. Information on the screen is divided into, for example, two categories: high priority and low-priority. When the viewer presses a button on the remote control (or other input device) to navigate an on-screen user interface, high priority items are updated followed by low-priority items. High priority items are always updated before additional user input can be received. Low-priority items, however, are only updated when the processor has time to do so. As such, if a viewer presses a navigational remote control button multiple times in succession, the system will update high priority items, but waits to update low-priority items until there is enough processor time to do so. As a result, the viewer is not required to wait for all of the information to be displayed before continuing navigation.

In one embodiment, a first request to scroll through a program guide is received. Information in the program guide is then updated such that the highest priority is given to information on or immediately surrounding the location of the user's selection. A first region of the program is displayed. A determination is made regarding whether a second request to scroll through the program guide is received. If a second request to scroll through the program guide is received, information update of lower-priority items ceases and restarts with high-priority items. If a second request to scroll through the program guide is not received, a second region of the program guide is displayed.

In another embodiment, a first request to update a program guide is received. Multiple program guide regions are then displayed progressively. Display of the multiple program guide regions is terminated if a second request to update the program guide is received.

### BRIEF DESCRIPTION OF THE DRAWINGS

The same numbers are used throughout the drawings to reference like features and components.

Fig. 1 illustrates an exemplary environment in which the systems and methods described herein may be implemented.

Fig. 2 illustrates of an example client device, a television, and various input devices that interact with the client device.

Fig. 3 is a block diagram that illustrates components of the example client device(s) shown in Figs. 1 and 2.

Fig. 4 illustrates an example program guide that shows a portion of a channel programming lineup for a particular Tuesday.

Fig. 5 illustrates the program guide after scrolling ahead by thirty minutes.

Figs. 6-9 illustrate a sequential display of various regions of the program guide shown in Fig. 5.

Figs. 10A and 10B illustrate a flow diagram of a procedure for displaying program guide information when a viewer is scrolling ahead or back in time.

Figs. 11A and 11B illustrate a flow diagram of a procedure for displaying program guide information when a viewer is scrolling ahead or back through a list of channels.

Fig. 12 illustrates a flow diagram of a procedure for progressively displaying information.

### DETAILED DESCRIPTION

The following discussion provides specific examples directed to television-based entertainment systems, such as interactive TV networks, cable networks that utilize electronic program guides, and Web-enabled TV networks. Clients in such systems range from full-resource clients with substantial memory and processing resources, such as TV-enabled personal computers and TV recorders equipped with hard-disks, to low-resource clients with limited memory and/or processing resources, such as traditional set-top boxes. While aspects of the described systems and methods can be used in any of these systems and for any types of clients, they are described in the context of the following exemplary environment.

Although several examples discussed herein are described in the context of television-based entertainment systems, the methods and systems described herein may be applied to any system or environment in which information is displayed to a viewer. Information may be displayed on a television, computer monitor, or other display device. The information is displayed progressively such that high priority information is displayed before lower priority data. A viewer input that requests an update to the displayed information causes the system to halt the current display of information and begin generating the updated information.

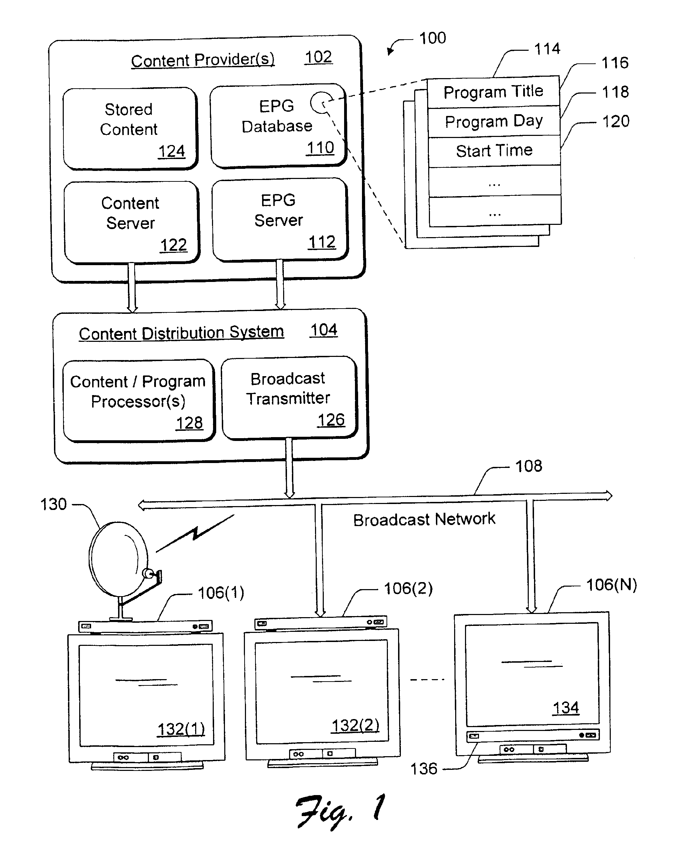

Fig. 1 illustrates an exemplary environment 100 in which the methods and systems described herein may be implemented. Exemplary environment 100 is a television entertainment system that facilitates distribution of content and program data to multiple viewers. The environment 100 includes one or more content providers 102, a content distribution system 104, and multiple client devices 106(1), 106(2), ..., 106(N) coupled to the content distribution system 104 via a broadcast network 108.

Content provider 102 includes an electronic program guide (EPG) database 110 and an EPG server 112. The EPG database 110 stores electronic files of program data 114 that is used to generate an electronic program guide (or, "program guide"). Program data includes program titles, ratings, characters, descriptions, actor names, station identifiers, channel identifiers, schedule information, and the like. The terms "program data" and "EPG data" are used interchangeably throughout this discussion. For discussion purposes, an electronic file maintains program data 114 that includes a program title 116, a program day or days 118 to identify which days of the week the program will be shown, and a start time or times 120 to identify the time that the program will be shown on the particular day or days of the week.

The EPG server 112 processes the EPG data prior to distribution to generate a published version of the program data which contains programming information for all channels for one or more days. The processing may involve any number of techniques to reduce, modify, or enhance the EPG data. Such processes might include selection of content, content compression, format modification, and the like. The EPG server 112 controls distribution of the published version of the program data from content provider 102 to the content distribution system 104 using, for example, a file transfer protocol (FTP) over a TCP/IP network (e.g., Internet, UNIX, etc.).

Content provider 102 also includes a content server 122 and stored content 124, such as movies, television programs, commercials, music, and similar audio and/or video content. Content server 122 controls distribution of the stored content 124 and EPG data from content provider 102 to the content distribution system 104. Additionally, content server 102 controls distribution of live content (e.g., content that was not previously stored, such as live feeds) and/or content stored at other locations to the content distribution system 104.

Content distribution system 104 contains a broadcast transmitter 126 and one or more content and program data processors 128. Broadcast transmitter 126 broadcasts signals, such as cable television signals, across broadcast network 108. Broadcast network 108 can include a cable television network, RF, microwave, satellite, and/or data network, such as the Internet, and may also include wired or wireless media using any broadcast format or broadcast protocol. Additionally, broadcast network 108 can be any type of network, using any type of network topology and any network communication protocol, and can be represented or otherwise implemented as a combination of two or more networks.

Content and program data processor 128 processes the content and program data received from content provider 102 prior to transmitting the content and program data across broadcast network 108. A particular content processor may encode, or otherwise process, the received content into a format that is understood by the multiple client devices 106(1), 106(2), ..., 106(N) coupled to broadcast network 108. Although Fig. 1 shows a single content provider 102 and a single content distribution system 104, environment 100 can include any number of content providers coupled to any number of content distribution systems.

Content distribution system 104 is representative of a headend service that provides EPG data, as well as content, to multiple subscribers. Each content distribution system 104 may receive a slightly different version of the program data that takes into account different programming preferences and lineups. The EPG server 112 creates different versions of EPG data (e.g., different versions of a program guide) that include those channels of relevance to respective headend services. Content distribution system 104 transmits the EPG data to the multiple client devices 106(1), 106(2), ..., 106(N). In one implementation, for example, distribution system 104 utilizes a carousel file system to repeatedly broadcast the EPG data over an out-of-band (OOB) channel to the client devices 106.

Client devices 106 can be implemented in a number of ways. For example, a client device 106(1) receives broadcast content from a satellite-based transmitter via a satellite dish 130. Client device 106(1) is also referred to as a set-top box or a satellite receiving device. Client device 106(1) is coupled to a television 132(1) for presenting the content received by the client device (e.g., audio data and video data), as well as a graphical user interface. A particular client device 106 can be coupled to any number of televisions 132 and/or similar devices that can be implemented to display or otherwise render content. Similarly, any number of client devices 106 can be coupled to a television 132.

Client device 106(2) is coupled to receive broadcast content from broadcast network 108 and provide the received content to associated television 132(2). Client device 106(N) is an example of a combination television 134 and integrated set-top box 136. In this example, the various components and functionality of the set-top box are incorporated into the television, rather than using two separate devices. The set-top box incorporated into the television may receive broadcast signals via a satellite dish (similar to satellite dish 130) and/or via broadcast network 108. In alternate implementations, client devices 106 may receive broadcast signals via the Internet or any other broadcast medium.

Each client 106 runs an electronic program guide (EPG) application that utilizes the program data. An EPG application enables a TV viewer to navigate through an onscreen program guide and locate television shows of interest to the viewer. With an EPG application, the TV viewer can look at schedules of current and future programming, set reminders for upcoming programs, and/or enter instructions to record one or more television shows.

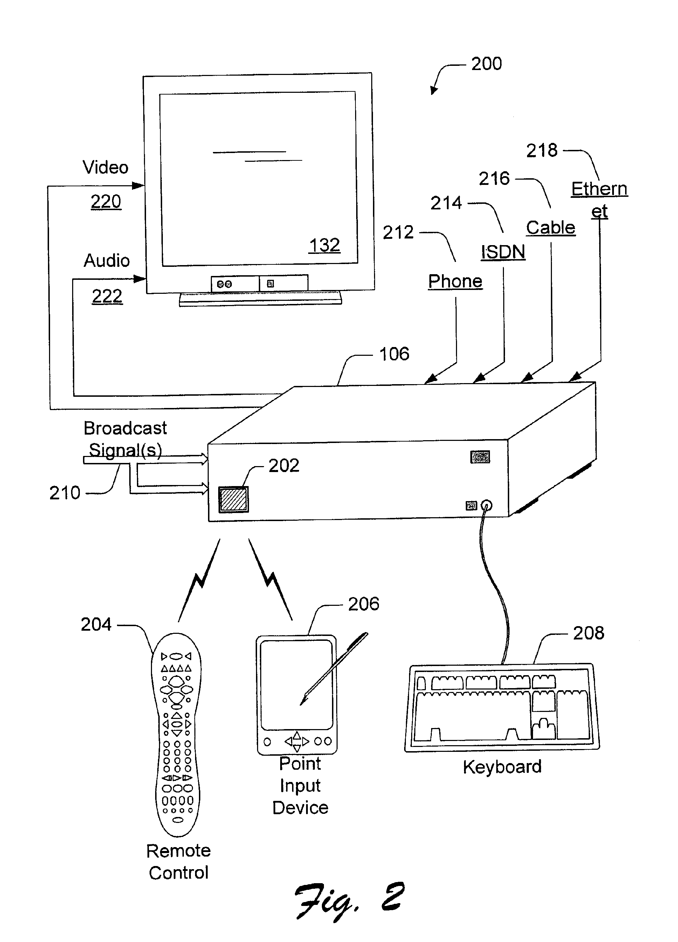

Fig. 2 illustrates an exemplary implementation 200 of a client device 106 shown as a standalone unit that connects to a television 132. Client device 106 can be implemented in any number of embodiments, including as a set-top box, a satellite receiver, a TV recorder with a hard disk, a game console, an information appliance, and so forth. Client device 106 includes a wireless receiving port 202, such as an infrared (IR) or Bluetooth wireless port, for receiving wireless communications from a remote control device 204, a handheld input device 206, or any other wireless device, such as a wireless keyboard. Handheld input device 206 can be a personal digital assistant (PDA), handheld computer, wireless phone, or the like. Additionally, a wired keyboard 208 is coupled to communicate with the client device 106. In alternate embodiments, remote control device 204, handheld device 206, and/or keyboard 208 may us an RF communication link or other mode of transmission to communicate with client device 106.

Client device 106 receives one or more broadcast signals 210 from one or more broadcast sources, such as from a satellite or from a broadcast network. Client device 106 includes hardware and/or software for receiving and decoding broadcast signal 210, such as an NTSC, PAL, SECAM or other TV system video signal. Client device 106 also includes hardware and/or software for providing the viewer with a graphical user interface by which the viewer can, for example, access various network services, configure the client device 106, and perform other functions.

Client device 106 is capable of communicating with other devices via one or more connections including a conventional telephone link 212, an ISDN link 214, a cable link 216, and an Ethernet link 218. Client device 106 may use any one or more of the various communication links 212-218 at a particular instant to communicate with any number of other devices.

Client device 106 generates video signal(s) 220 and audio signal(s) 222, both of which are communicated to television 132. The video signals and audio signals can be communicated from client device 106 to television 132 via an RF (radio frequency) link, S-video link, composite video link, component video link, or other communication link. Although not shown in Fig. 2, client device 106 may include one or more lights or other indicators identifying the current status of the device. Additionally, the client device may include one or more control buttons, switches, or other selectable controls for controlling operation of the device.

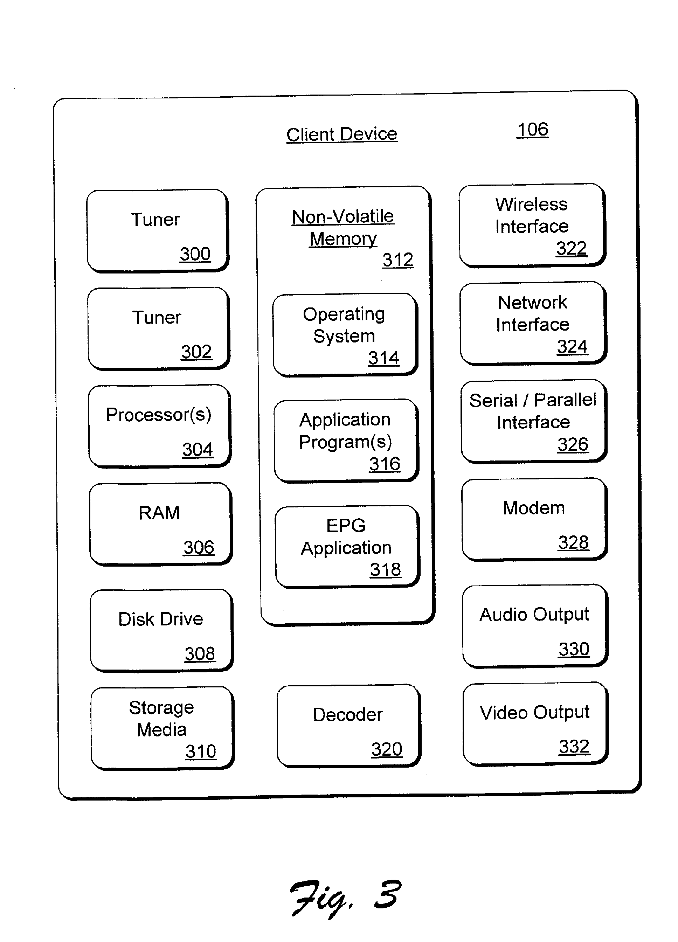

Fig. 3 illustrates selected components of client device 106 shown in Figs. 1 and 2. Client device 106 includes a first tuner 300 and an optional second tuner 302. The tuners 300 and 302 are representative of one or more in-band tuners that tune to various frequencies or channels to receive television signals, as well as an out-of-band tuner that tunes to the broadcast channel over which the EPG data is broadcast to client device 106.

Client device 106 also includes one or more processors 304 and one or more memory components. Examples of possible memory components include a random access memory (RAM) 306, a disk drive 308, a mass storage component 310, and a non-volatile memory 312 (e.g., ROM, Flash, EPROM, EEPROM, etc.). Alternative implementations of client device 106 can include a range of processing and memory capabilities, and may include more or fewer types of memory components than those illustrated in Fig. 3. For example, full-resource clients can be implemented with substantial memory and processing resources, including the disk drive 308 to store content for replay by the viewer. Low-resource clients, however, may have limited processing and memory capabilities, such as a limited amount of RAM 306, no disk drive 308, and limited processing capabilities.

Processor(s) 304 process various instructions to control the operation of client device 106 and to communicate with other electronic and computing devices. The memory components (e.g., RAM 306, disk drive 308, storage media 310, and non-volatile memory 312) store various information and/or data such as content, EPG data, configuration information for client device 106, and/or graphical user interface information.

An operating system 314 and one or more application programs 316 may be stored in non-volatile memory 312 and executed on processor 304 to provide a runtime environment. A runtime environment facilitates extensibility of client device 106 by allowing various interfaces to be defined that, in turn, allow application programs 316 to interact with client device 106. In the illustrated example, an EPG application 318 is stored in memory 312 to operate on the EPG data and generate a program guide. The application programs 316 that may be implemented at client device 106 can include a browser to browse the Web, an email program to facilitate electronic mail, and so on. Client device 106 can also include other components pertaining to a television entertainment system which are not illustrated in this example for simplicity purposes. For instance, client device 106 can include a user interface application and user interface lights, buttons, controls, etc. to facilitate viewer interaction with the device.

Client device 106 also includes a decoder 320 to decode a broadcast video signal, such as an NTSC, PAL, SECAM or other TV system video signal. Client device 106 further includes a wireless interface 322, a network interface 324, a serial and/or parallel interface 326, and a modem 328. Wireless interface 322 allows client device 106 to receive input commands and other information from a user-operated input device, such as from a remote control device or from another IR, Bluetooth, or similar RF input device.

Network interface 324 and serial and/or parallel interface 326 allows client device 106 to interact and communicate with other electronic and computing devices via various communication links. Although not shown, client device 106 may also include other types of data communication interfaces to communicate with other devices. Modem 328 facilitates client device 106 communication with other electronic and computing devices via a conventional telephone line.

Client device 106 also includes an audio output 330 and a video output 332 that provide signals to a television or other device that processes and/or presents or otherwise renders the audio and video data. Although shown separately, some of the components of client device 106 may be implemented in an application specific integrated circuit (ASIC). Additionally, a system bus (not shown) typically connects the various components within client device 106. A system bus can be implemented as one or more of any of several types of bus structures, including a memory bus or memory controller, a peripheral bus, an accelerated graphics port, or a local bus using any of a variety of bus architectures. By way of example, such architectures can include an Industry Standard Architecture (ISA) bus, a Micro Channel Architecture (MCA) bus, an Enhanced ISA (EISA) bus, a Video Electronics Standards Association (VESA) local bus, and a Peripheral Component Interconnects (PCI) bus also known as a Mezzanine bus.

General reference is made herein to one or more client devices, such as client device 106. As used herein, "client device" means any electronic device having data communications, data storage capabilities, and/or functions to process signals, such as broadcast signals, received from any of a number of different sources.

Although the example discussed below relates to a television program guide, the methods and systems described herein may be applied to any system or environment in which information is displayed to a viewer. Alternate embodiments discussed later in this description point out other exemplary applications of the methods and systems described herein.

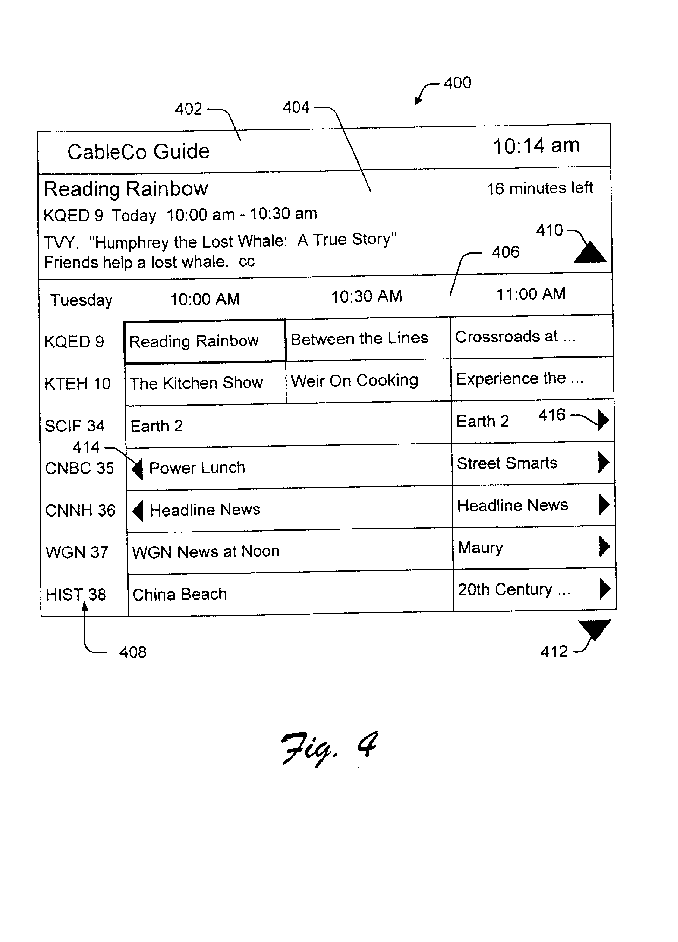

Fig. 4 illustrates an example program guide 400 that shows a portion of a channel programming lineup for a particular Tuesday. Program guide 400 is generated, for example, with electronic program guide (EPG) application 318 in client device 106 using program data 114, and displayed on television 132 (Figs. 1-2). The program guide 400 provides a viewer with a program title, program description, the associated local channel number and/or Network that will broadcast the program, and a time of the day that the program will be broadcast. For example, an episode of the television program "*Reading Rainbow*" is scheduled for broadcast on local channel nine (KQED) at 10:00 a.m.

Program guide 400 includes a header 402 and a program description region 404. Header 402 displays, for example, the name of the local cable company (or content distributor) and the current time. Program description region 404 displays information about the currently selected program (*Reading Rainbow* in this example). The program description region 404 also displays the time left in a currently running program (e.g., "16 minutes left") or the time until the program begins (e.g., "starts in 25 minutes"). Program guide 400 also includes a "time row" 406, which identifies the current day and one or more time periods currently being displayed. In the example program guide, the time period 10:00 a.m. - 11:30 a.m. is displayed. In this example, the time row 406 of program guide 400 includes three "time columns": a first time column from 10:00 a.m. - 10:30 a.m., a second time column from 10:30 a.m. - 11:00 a.m., and a third time column from 11:00 a.m. - 11:30 a.m. In alternate embodiments, the time row 406 may represent any time duration and may include any number of time columns. A particular program may span any number of time columns.

As shown in Fig. 4, a single program, *Reading Rainbow*, is highlighted as the currently selected program. In this example, the currently selected program is identified by a thicker border. Alternatively, the currently selected program can be identified by changing the color of the text and/or background associated with a particular program, or any other modification to the display that distinguishes one program from the others. The currently selected program may, by default, be located in the upper left corner of the program grid (as shown in Fig. 4), or may be located elsewhere in the program grid. In this embodiment, the program grid is a two-dimensional grid of program listings defined horizontally by the currently selected time columns and defined vertically by the currently displayed channels. The programs displayed in the program grid change as the viewer enters commands to scroll up, scroll down, scroll left or scroll right.

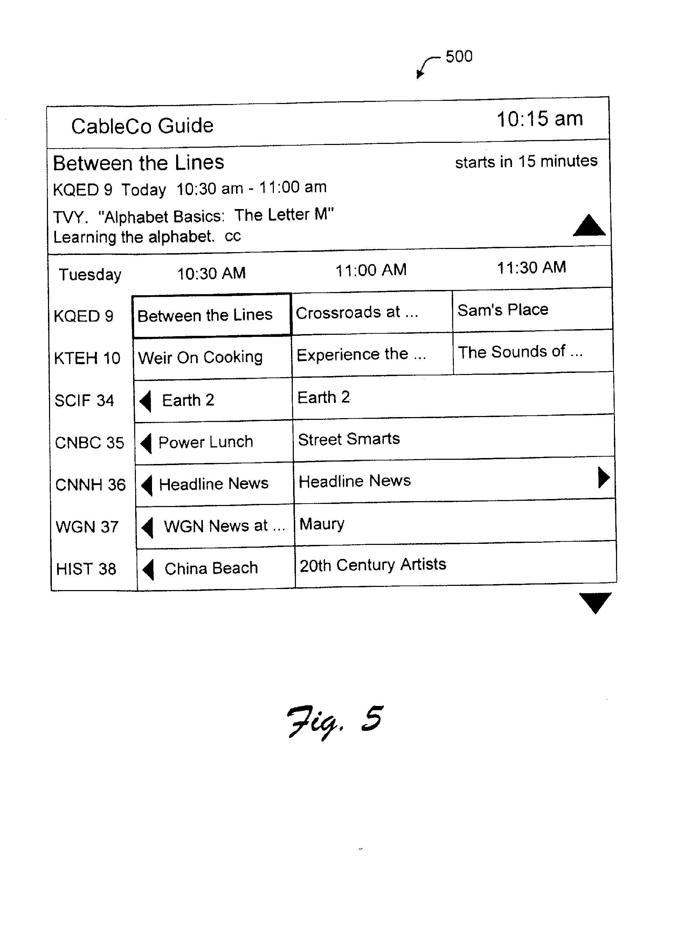

A viewer can change the currently selected program within program guide 400 by manipulating, for example, remote control 204 to input a control command to client device 106. As shown, the currently selected program, *Reading Rainbow,* is scheduled for broadcast by KQED (local channel 9) from 10:00 a.m. - 10:30 a.m. Using remote control 204, a viewer can enter a request to scroll to a different time entry and/or a different channel. For example, Fig. 5 shows an updated program guide 500 representing the changes made when a viewer enters a control command to scroll one time column to the right (i.e., scrolling ahead in time by 30 minutes). The updated program guide 500 now highlights the program *"Between the Lines"* and shows a program grid having a time row from 10:30 a.m. - 12:00 p.m.

Referring back to Fig. 4, program guide 400 also includes a listing of seven channels arranged in a column 408. This listing of seven channels is arranged, for example, in ascending numerical order from top to bottom. In alternate embodiments, the listing of channels may be arranged in any order, such as a descending numerical order or an arrangement that places "favorite channels" at the top of the listing. A viewer can change the channel associated with the currently selected program by entering a control command to scroll up or down through the list of available channels. An upward pointing arrow 410 indicates that additional channels are available earlier in the channel list by scrolling up. A downward pointing arrow 412 indicates that additional channels are available further down the channel list by scrolling down. The left-pointing arrows 414 indicate that the particular program started in an earlier time period not currently shown in the program grid. For example, the program *"Power Lunch"* may begin at 9:00 a.m. Similarly, the right-pointing arrows 416 indicate that the particular program ends in a later time period not currently shown in the program grid. For example, the program *"Street Smarts"* may continue until 12:00 p.m.

Program guide 400 represents one embodiment of a program guide. The teachings of the present invention may be applied to environments using other types of program guides including more or less information and program guides that arrange information in a different manner.

Referring again to Fig. 5, the program guide 500 illustrates the result of a viewer control input to scroll ahead by thirty minutes. As shown in Fig. 5, the program description has been updated to correspond to the currently selected program, *Between the Lines*. The program grid has been updated to include programs scheduled during the new time period selected (10:30 a.m. - 12:00 p.m.).

Depending on the amount of data in a particular program guide and the computing power of the processor(s) generating and rendering the program guide, it may take a significant amount of time (e.g., one second or longer) to completely render the program guide 500 on a television or other display device. Rather than rendering the entire program guide 500 before checking for additional viewer control input, the client device 106 regularly checks for viewer control input during the rendering of the program guide. The program guide 500 is divided into multiple program guide regions. When rendering the program guide 500, the client device 106 checks for viewer control input between rendering of each program guide region. Regions are combined into either the high-priority or low-priority group. Regions in the high-priority group might include, for example, the current selection, the time row, and the title on the current selection.

When rendering the high-priority group, the client device 106 checks for viewer control input. For the high-priority group, if no viewer control input is received, the client device 106 continues by rendering the low-priority group in the program guide. If, however, input is received while rendering high-priority regions, that input is queued or ignored until rendering of the high-priority group is complete. This ensures that information most pertinent to the task the user is completing is updated first.

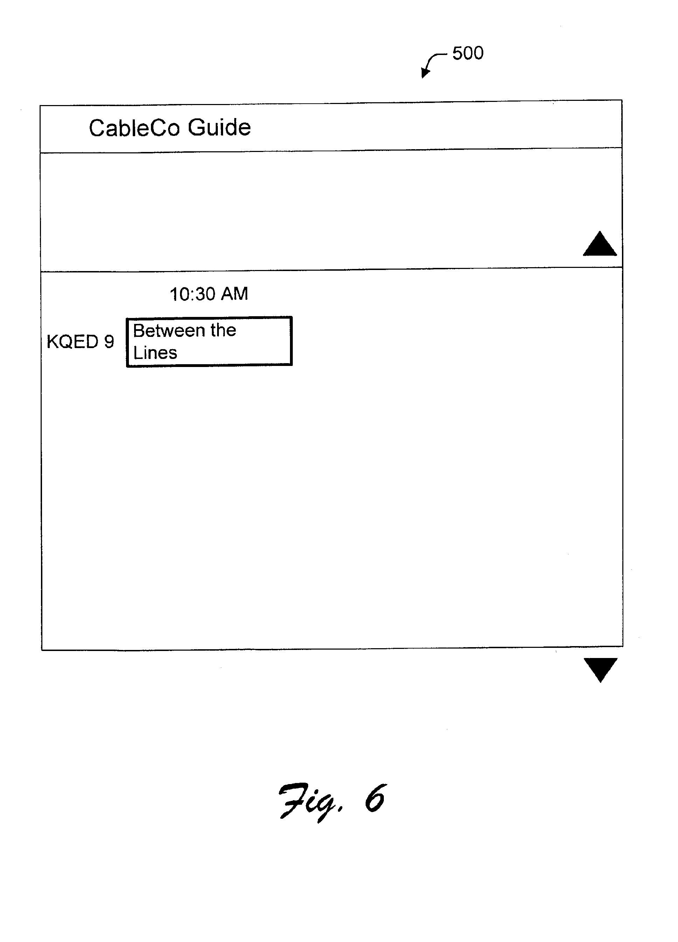

If viewer control input is received when rendering regions in the low-priority group, the client device 106 halts further low-priority updates to the display, restarting with high-priority updates that reflect changes resulting from the viewer's input. Figs. 6-9 illustrate a sequential display of various regions of the program guide 500 shown in Fig. 5. The order in which the regions of the program guide are displayed are selected based on the likelihood that the information contained in the region is important to the viewer. The regions containing information that is likely to be of greatest interest to the viewer are displayed before those regions likely to be of lesser interest to the viewer.

Fig. 6 illustrates the program guide 500 after rendering the high-priority group of regions. As shown in Fig. 6, in this example the high-priority group includes the currently selected program *(Between the Lines),* the channel associated with the currently selected program, and a portion of the time row. Additionally, Fig. 6 shows the name of the cable company or other content distributor, which may remain constant regardless of viewer changes to the program guide contents. Similarly, the up and down arrows may remain constant. Alternatively, the up and down arrows are rendered after the rest of the program guide has been rendered.

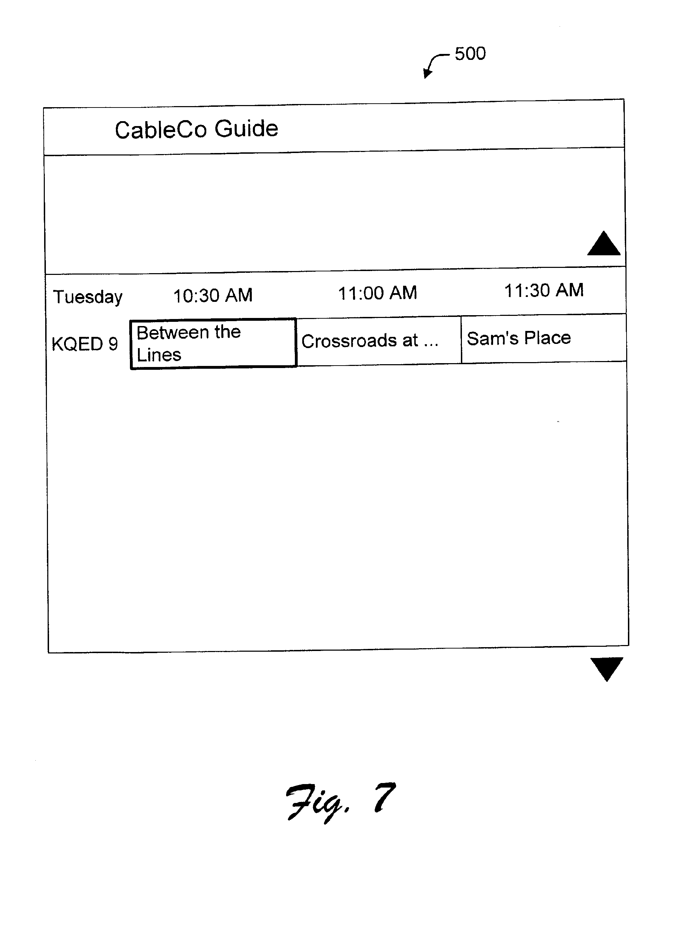

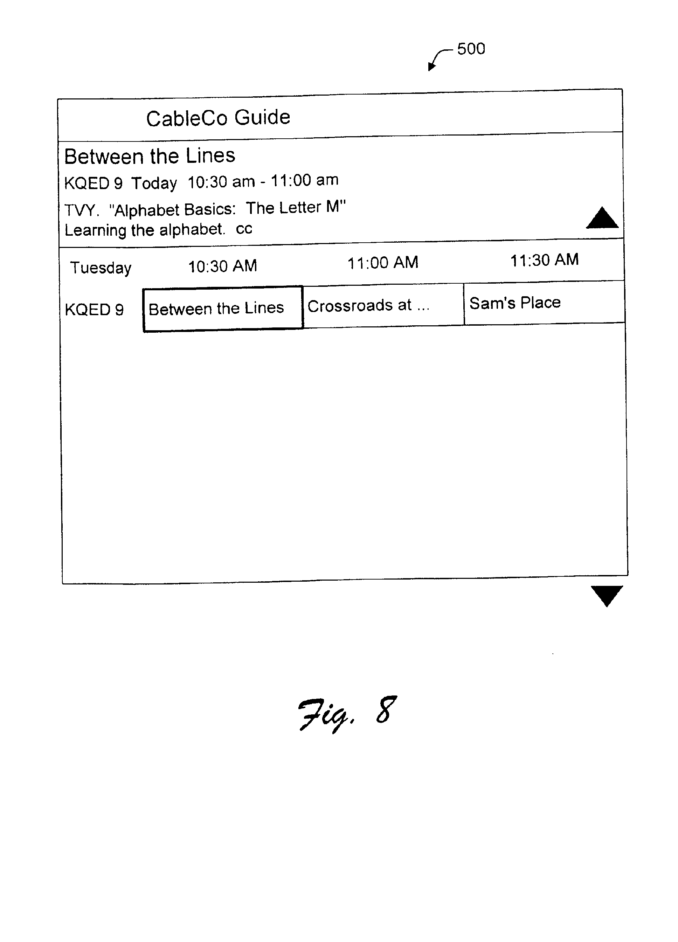

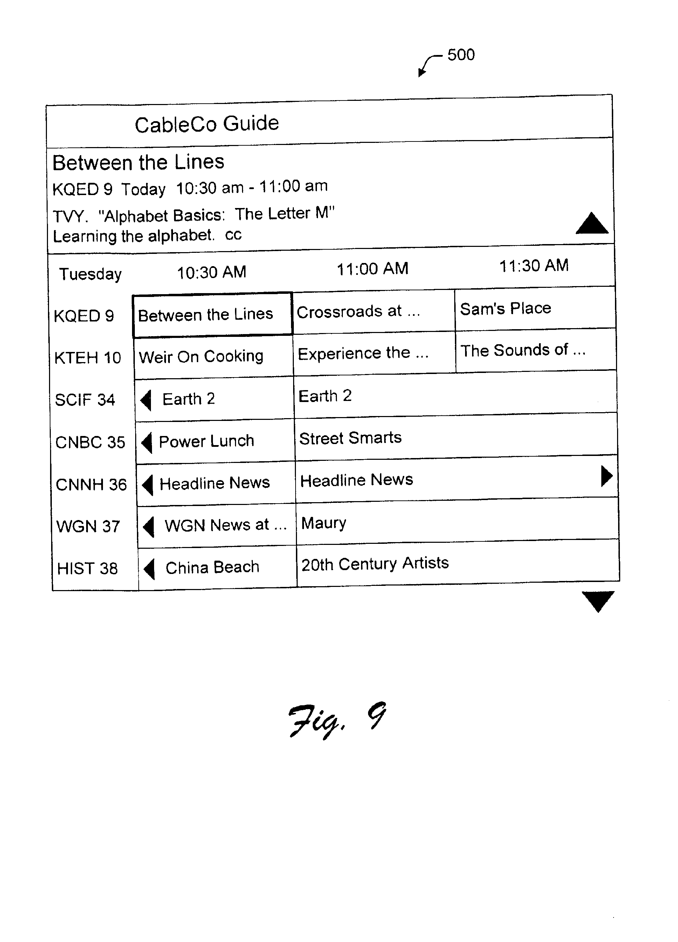

Fig. 7 illustrates the program guide 500 after rendering a portion of the low-priority group of regions. The program guide 500 shown in Fig. 7 includes the information shown in Fig. 6 (i.e., the first high-priority group) as well as the additional information from the low-priority group. Figs. 8 and 9 illustrate the display of additional portions of the low-priority group of regions. The complete low-priority group includes the entire time row, the program description and the other programs that need to be displayed in the current grid.

High-priority and low-priority groups are customizable, and may differ based on the navigation that the viewer is entering. For example, when navigating horizontally in the example described, the time row is of particular importance. As such, it is part of the high-priority group for left and right navigation. When navigating vertically, the channel column is of particular importance, but the time row has little relevance. As such, the channel column is part of the high-priority group, but the time row is part of the low-priority group.

The various regions discussed herein are provided by way of example. Alternate embodiments may include any number of high-priority regions and any number of low-priority regions. Additionally, the information contained in a particular region may vary from one embodiment to another.

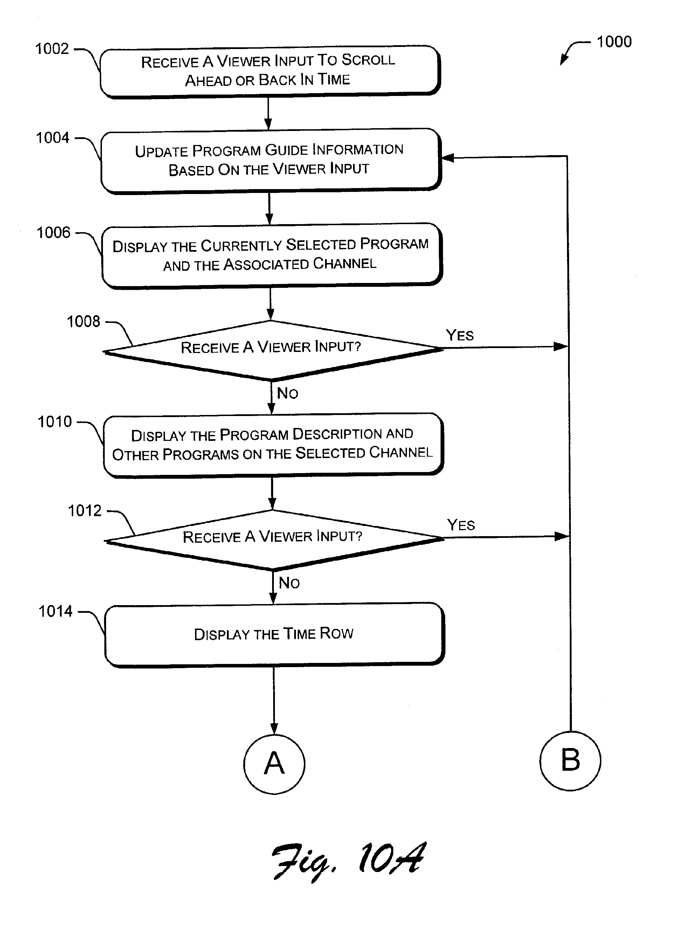

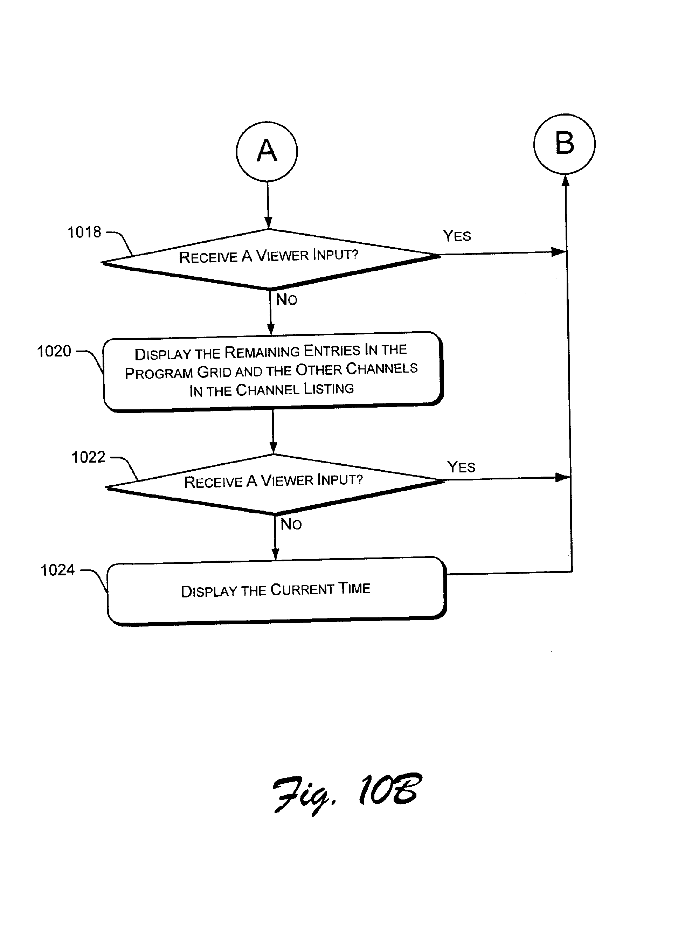

Figs. 10A and 10B illustrate a flow diagram of a procedure 1000 for displaying program guide information when a viewer is scrolling ahead or back in time (i.e., scrolling to the left or right through the program guide). A client device receives a viewer input to scroll ahead or back in time through the program guide (block 1002). As mentioned above, certain portions of the program guide may remain constant (e.g., the cable company name and the scroll arrows) and are not updated with the various regions of the program guide. The program guide information to be displayed is then updated based on the viewer input (block 1004). For example, the information displayed in the program guide may be shifted ahead in time by 30 minutes if the viewer input requested to scroll the program guide to the right.

The procedure 1000 then updates regions in the high-priority group of the program guide, which corresponds to the currently selected program and the associated channel (block 1006). An example of this display of information corresponds to the program guide illustrated in Fig. 6. At block 1008, the procedure determines whether a viewer input (e.g., scroll ahead in time) has been received. This viewer input is different from the viewer input previously received in block 1002. If a viewer input is received at block 1008, the procedure returns to block 1004 to restart updating high-priority regions with information based on the new viewer input. If a viewer input is not received at block 1008, the procedure continues by displaying low-priority items: the program description and other programs associated with the same channel as the currently selected program (block 1010).

At block 1012, the procedure determines whether a viewer input has been received. If so, the procedure returns to block 1004. If no viewer input has been received, the procedure continues displaying low-priority items, such as the time row (block 1014). At block 1018, the procedure determines whether a viewer input has been received. If a viewer input has been received, the procedure returns to block 1004. If no viewer input has been received, the procedure continues displaying additional low-priority items, such as the remaining entries in the program grid and the other channels in the channel listing (block 1020).

At block 1022, the procedure determines whether a viewer input has been received. If so, the procedure returns to block 1004. If no viewer input has been received, the procedure displays the last low-priority item, which is the current time (block 1024). An example of the completed display of information corresponds to the program guide illustrated in Fig. 5.

The program guide region information and the order in which the various regions are displayed is based on the expected information a viewer wants to see when scrolling through the program guide. For example, if the viewer is repeatedly pressing the right arrow button on the remote control (to scroll ahead in time), the viewer is likely to be interested in the currently selected program and other programs on the currently selected channel, but later in time. Thus, the system displays this program information first. If, after viewing the current program and/or other programs on the same channel, the viewer wants to continue scrolling, the remaining portions of the program guide are not rendered. Instead, the program guide is updated and the process of progressively displaying the various regions of the program guide begins again. Thus, after providing a control input, the viewer does not have to wait for the entire program guide to be rendered. This increases the speed at which the viewer can scroll through the program guide and select the desired program entry.

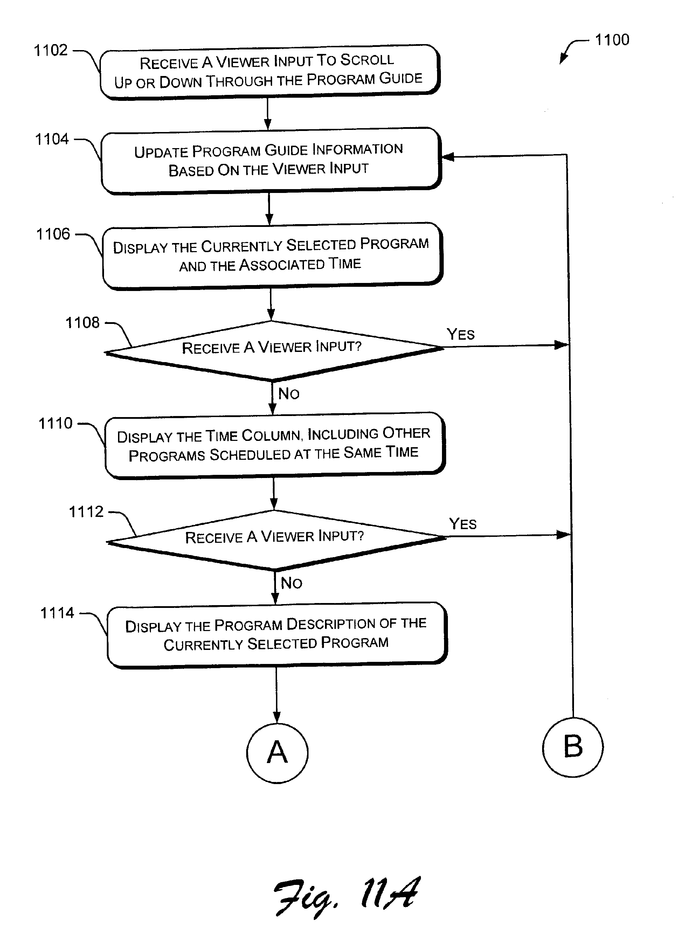

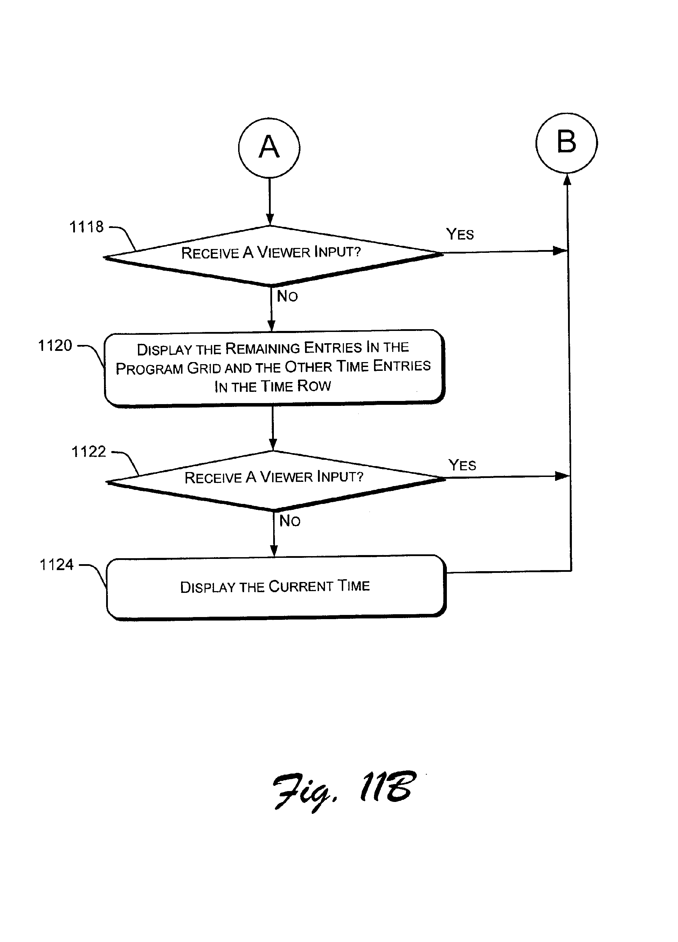

Figs. 11A and 11B illustrate a flow diagram of a procedure 1100 for displaying program guide information when a viewer is scrolling ahead or back through a list of channels (i.e., scrolling up or down through the program guide). This procedure is similar to the procedure 1000 discussed above with respect to Figs. 10A and 10B. This procedure is used when the viewer scrolls up or down through the program guide. The procedure anticipates that the viewer is likely to be interested in the currently selected program and other programs on different channels at the same time.

A client device receives a viewer input to scroll up or down through the program guide (block 1102). As mentioned above, certain portions of the program guide may remain constant (e.g., the cable company name and the scroll arrows) and are not updated like other portions of the program guide. The program guide information to be displayed is updated based on the viewer input (block 1104). For example, the information displayed in the program guide may be shifted up or down by one channel in the channel listing.

The procedure 1100 then displays the high-priority information, such as the currently selected program and the associated time (block 1106). At block 1108, the procedure determines whether a viewer input (e.g., scroll up or scroll down) has been received. This viewer input is different from the viewer input previously received in block 1102. If a viewer input is received at block 1108, the procedure returns to block 1104 to update the program guide based on the new viewer input. If a viewer input is not received at block 1108, the procedure continues by displaying low-priority information, such as the time column and other programs scheduled at the same time as the currently selected program (block 1110).

At block 1112, the procedure determines whether a viewer input has been received. If so, the procedure returns to block 1104. If no viewer input has been received, the procedure continues displaying low-priority information, such as the program description of the currently selected program (block 1114). At block 1118, the procedure determines whether a viewer input has been received. If a viewer input has been received, the procedure returns to block 1104. If no viewer input has been received, the procedure continues displaying low-priority information; e.g., the remaining entries in the program grid and the other time entries in the time row (block 1120). At block 1122, the procedure determines whether a viewer input has been received. If so, the procedure returns to block 1104. If no viewer input has been received, the procedure displays the final low-priority information, such as the current time (block 1124).

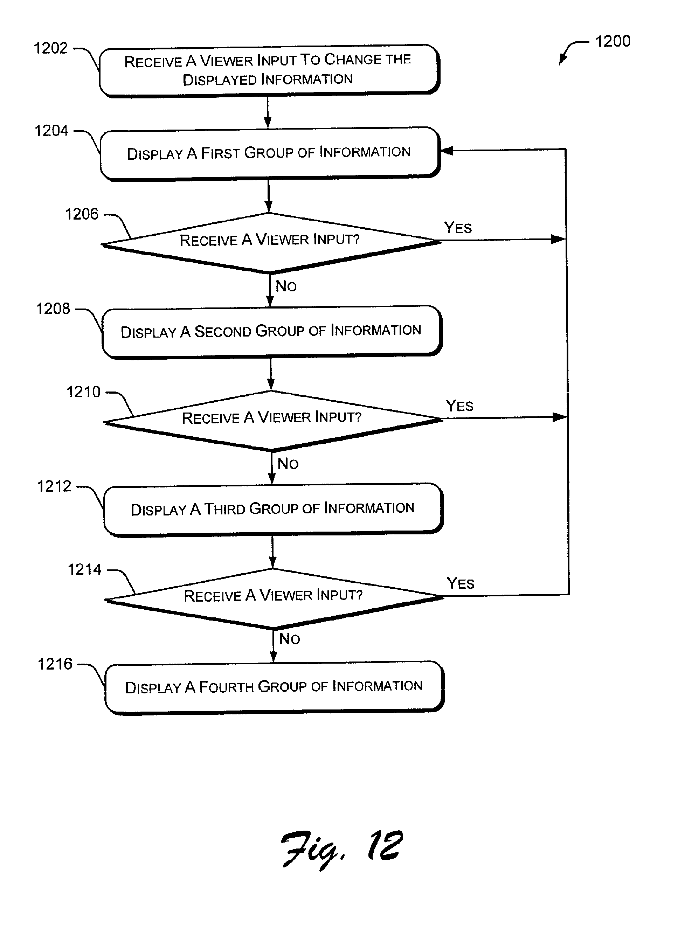

Fig. 12 is a flow diagram of a procedure 1200 for progressively displaying information. In the example of Fig. 12, four different groups of information are progressively displayed to a viewer. Each group of information may represent a type of information (such as a summary, a picture or a table of data), a region of the display screen, or any other displayed data. Initially, a viewer input is received to change the displayed information (block 1202). For example, the viewer may scroll the display such that different information should be displayed. Alternatively, the viewer may choose to display a different type of information (e.g., change from displaying a video image to displaying a list of received email messages).

After receiving a viewer input to change the displayed information, the procedure 1200 displays a first group of information (block 1204). Where a viewer has requested to display, for example, a list of received email messages, the first group of information may include the "subject" portion of one or more email messages. The procedure then determines whether a viewer input to change or update the displayed information has been received. If so, the procedure returns to block 1204 to redisplay the updated first group of information. Otherwise, the procedure continues to block 1208, which displays a second group of information. In the email example, the second group of information may include the "from" portion of one or more email messages.

The procedure 1200 then determines whether a viewer input to change or update the displayed information has been received. If a viewer input is received, the procedure returns to block 1204. If no viewer input is received, the procedure continues by displaying a third group of information (block 1212). Following the email example, the third group of information may include a preview window displaying at least a portion of the text of one of the email messages. The procedure then determines whether a viewer input to change or update the displayed information has been received. If so, the procedure returns to block 1204. Otherwise, the procedure continues to block 1216, which displays a fourth group of information. At this point, all four groups of information are displayed. The procedure 1200 may be executed again in response to another viewer input to change the displayed information.

The procedure discussed above with respect to Fig. 12 displays four different groups of information. Alternate embodiments may display any number of groups of information. The groups of information are prioritized into a known or an expected preferred order such that the highest priority information (i.e., the first group of information) is displayed first, followed by the next highest priority information (i.e., the second group of information), and so on. This process continues until all information is displayed or a viewer input to change the display is received, whichever occurs first. The order in which the groups of information are displayed may change depending on the type of control inputs received from the viewer (e.g., the direction in which the viewer is scrolling or the type of information the viewer has previously viewed).

In one embodiment, the first group of information is the information closest to a selected item. The second group of information is the information next closest to the selected item, and so forth.

In a particular embodiment, to properly render multiple groups of information, each group of information is capable of being rendered separately from the other groups of information. Additionally, the software that renders each group of information should be capable of checking for pending user input prior to (or after) rendering a particular group of information.

Although the invention has been described in language specific to structural features and/or methodological steps, it is to be understood that the invention defined in the appended claims is not necessarily limited to the specific features or steps described. Rather, the specific features and steps are disclosed as preferred forms of implementing the claimed invention.

## Claims

1. A method comprising:
receiving a request to update displayed information;
progressively displaying a plurality of information groups; and
terminating display of the plurality of information groups if a second request to update the displayed information is received.

2. A method as recited in claim 1 wherein terminating display of the plurality of information groups includes clearing the displayed information.

3. A method as recited in claim 1 wherein the plurality of information groups are prioritized, and wherein the highest priority information groups are displayed prior to lower priority information groups.

4. A method as recited in claim 1 wherein the plurality of information groups are prioritized based on their level of importance to the viewer.

5. A method as recited in claim 1 wherein the plurality of information groups are prioritized based on their proximity to a selected item in the display.

6. A method as recited in claim 1 wherein the plurality of information groups are prioritized based on a direction in which the viewer is navigating through the display.

7. One or more computer-readable media comprising computer-executable instructions that, when executed, direct a computing system to perform the method of claim 1.

8. A method comprising:
displaying a first group of information;
determining whether a request to change the displayed information is received;
updating the first group of information if a request to change the displayed information is received; and
displaying a second group of information if a request to change the displayed information is not received.

9. A method as recited in claim 8 wherein the first group of information has an associated first priority and the second group of information has an associated second priority, wherein the first priority is greater than the second priority.

10. A method as recited in claim 8 further comprising displaying a third group of information if no additional requests to change the displayed information are received.

11. A method as recited in claim 10 wherein the third group of information has a priority that is lower than the first group of information and lower than the second group of information.

12. A method as recited in claim 8 wherein the first group of information and the second group of information are prioritized based on their level of importance to the viewer.

13. A method as recited in claim 8 wherein the first group of information and the second group of information are prioritized based on their proximity to a particular item in the display.

14. One or more computer-readable media comprising computer-executable instructions that, when executed, direct a computing system to perform the method of claim 8.

15. A method comprising:
receiving a first request to scroll through a program guide;
displaying a first region of the program guide;
determining whether a second request to scroll through the program guide is received;
updating and redisplaying the first region of the program guide if a second request to scroll through the program guide is received; and
displaying a second region of the program guide if a second request to scroll through the program guide is not received.

16. A method as recited in claim 15 wherein the program guide is an electronic program guide.

17. A method as recited in claim .15 further comprising displaying a third region of the program guide if no additional requests to scroll through the program guide are received.

18. A method as recited in claim 17 wherein the third region of the program guide includes a program description associated with a currently selected channel.

19. A method as recited in claim 15 further comprising:
displaying a third region of the program guide if no additional requests to scroll through the program guide are received; and
displaying a fourth region of the program guide if no additional requests to scroll through the program guide are received.

20. A method as recited in claim 15 wherein the first region of the program guide includes a currently selected channel and a program associated with the currently selected channel.

21. A method as recited in claim 15 wherein the second region of the program guide includes currently selected time periods being displayed in the program guide.

22. One or more computer-readable media comprising computer-executable instructions that, when executed, direct a computing system to perform the method of claim 15.

23. A method comprising:
receiving a first request to update a program guide;
progressively displaying a plurality of program guide regions; and
terminating display of the plurality of program guide regions if a second request to update the program guide is received.

24. A method as recited in claim 23 wherein terminating display of the plurality of program guide regions includes updating and redisplaying the plurality of program guide regions.

25. A method as recited in claim 23 wherein terminating display of the plurality of program guide regions includes updating the program guide based on the second request to update the program guide.

26. A method as recited in claim 23 wherein the first request to update a program guide is a request to display a different time period.

27. A method as recited in claim 23 wherein the first request to update a program guide is a request to display programs on a different set of channels.

28. A method as recited in claim 23 wherein the program guide is an electronic program guide.

29. One or more computer-readable media comprising computer-executable instructions that, when executed, direct a computing system to perform the method of claim 23.

30. method comprising:
receiving a first request to update a program guide;
displaying high priority program guide regions;
terminating display of the program guide after displaying the high priority program guide regions if a second request to update the program guide is received; and
displaying low priority program guide regions if a second request to update the program guide is not received.

31. A method as recited in claim 30 wherein terminating display of the program guide includes updating the program guide based on the second request to update the program guide.

32. One or more computer-readable media comprising computer-executable instructions that, when executed, direct a computing system to perform the method of claim 30.

33. One or more computer-readable media comprising computer executable instructions that, when executed, direct a client device to:
receive a first request to update a program guide;
progressively display a plurality of program guide regions; and
terminate display of the plurality of program guide regions if a second request to update the program guide is received.

34. One or more computer-readable media as recited in claim 33 further comprising computer executable instructions that, when executed, direct the client device to update the program guide if a second request to update the program guide is received, wherein the program guide is updated based on the second request.

35. One or more computer-readable media as recited in claim 33 wherein the program guide is an electronic program guide.

36. A computer system comprising:
a memory;
a processor coupled to the memory; and
a program guide application stored in the memory and executed on the processor, the program guide application configured to progressively display a plurality of program guide regions and to terminate display of the plurality of program guide regions if a request to update the program guide is received by the computer system.

37. A computer system as recited in claim 36 wherein the plurality of program regions are displayed from highest priority to lowest priority.

38. A computer system as recited in claim 36 further comprising a user input device configured to generate requests to update the program guide.

39. A computer system as recited in claim 36 further comprising a wireless interface configured to receive requests to update the program guide.

40. A computer system as recited in claim 36 further comprising a display device configured to display the program guide.

41. A computer system as recited in claim 36 wherein the program guide application is further configured to receive program guide information via a broadcast network coupled to the computer system.

42. An apparatus comprising:
receiving means for receiving requests to update a program guide, wherein the program guide includes a plurality of program guide regions;
update means for updating information displayed in a program guide; and
generation means for generating signals to display the plurality of program guide regions, wherein the generation means progressively generates signals to display the plurality of program guide regions and terminates generation of the signals to display the plurality of program guide regions if a request to update the program guide is received.

43. An apparatus as recited in claim 42 wherein the generation means is further configured to update the program guide based on the request to update the program guide.
